# EUROPÄISCHE PATENTSCHRIFT

(11) **EP 3 069 814 B1**
(45) Veröffentlichungstag und Bekanntmachung des Hinweises auf die Patenterteilung: **24.06.2020**
(21) Anmeldenummer: 15000823.3
(22) Anmeldetag: 20.03.2015
(51) Int. Cl.: B23K 26/08

(54) **BESCHNEIDEVORRICHTUNG FÜR METALLHOHLKÖRPER UND VERFAHREN ZUM BESCHNEIDEN EINES METALLHOHLKÖRPERS**
CUTTING DEVICE FOR HOLLOW METAL BODIES AND METHOD FOR CUTTING A HOLLOW METAL BODY
DISPOSITIF DE DÉCOUPAGE POUR DES CORPS CREUX EN MÉTAL ET PROCÉDÉ DE DÉCOUPAGE D'UN CORPS CREUX EN MÉTAL

(43) Veröffentlichungstag der Anmeldung: 21.09.2016
(73) Patentinhaber: HINTERKOPF GmbH, 73054 Eislingen (DE)
(72) Erfinder: Drexler, Stefan, 73337 Bad Überkingen/Hausen (DE); Pflüger, Thomas, 73079 Süßen (DE)
(74) Vertreter: Patentanwälte Magenbauer & Kollegen Partnerschaft mbB

(56) Entgegenhaltungen:
- EP-A1- 2 574 421
- EP-B1- 2 522 473
- WO-A1-2013/140166
- DE-A1- 2 639 566
- US-A1- 2002 056 346

## Beschreibung

Die Erfindung betrifft eine Beschneidevorrichtung für Metallhohlkörper, insbesondere Aerosoldosen, mit einem Maschinengestell, an dem ein Werkstückrundtisch um eine Drehachse drehbar gelagert aufgenommen ist und an dem eine Schneideinrichtung angeordnet ist, wobei der Werkstückrundtisch mehrere Aufnahmeeinrichtungen umfasst, die jeweils für eine Festlegung eines Metallhohlkörpers zur Durchführung eines Beschneidevorgangs ausgebildet sind und wobei die Schneideinrichtung zur Bereitstellung eines Schneidstrahls, insbesondere eines Laserstrahls, für einen berührungslosen Beschneidevorgang am Metallhohlkörper ausgebildet ist, wobei dem Werkstückrundtisch eine Antriebseinrichtung zugeordnet ist, die für eine Bereitstellung einer Drehschrittbewegung an den Werkstückrundtisch ausgebildet ist und wobei die Aufnahmeeinrichtung ein drehbar um eine Bearbeitungsachse am Werkstückrundtisch gelagertes Spannmittel umfasst, das für eine Aufnahme eines Bereichs des Metallhohlkörpers ausgebildet ist.

Aus der DE-OS 26 39 566 ist eine Beschneidevorrichtung für Metallhohlkörper bekannt. Diese Beschneidevorrichtung umfasst einen Werkstückrundtisch, an dem mehrere Aufnahmedorne angeordnet sind, die jeweils zur Aufnahme eines Metallhohlkörpers ausgebildet sind. Der Werkstückrundtisch ist für eine Rotation um eine zentral gelegene Drehachse ausgebildet. Die Aufnahmedorne sind derart angeordnet, dass Längsachsen der zylindrisch ausgebildeten Metallhohlkörper parallel zur Drehachse ausgerichtet sind. Zudem ist jeder der Aufnahmedorne um eine parallel zur Drehachse des Werkstückrundtischs ausgerichtete Arbeitsachse drehbar gelagert. Die auf den Aufnahmedornen aufgenommen Metallhohlkörper werden während einer kontinuierlichen Drehbewegung des Werkstückrundtischs um die Arbeitsachsen der Aufnahmedorne rotiert, wodurch eine Überlagerung der beiden Drehbewegungen hervorgerufen wird. Während dieser überlagerten Bewegung wird der Metallhohlkörper mit einem Umfangsbereich an einem bogenförmigen, radial außenliegend dem Werkstückrundtisch zugeordneten Schneidmesser vorbeigeführt. Durch den Eingriff des Schneidmessers in den Umfangsbereich der jeweils vorbeigeführten Metallbehälter und die Überlagerung der beiden Drehbewegungen erfolgt ein endseitiger Beschnitt des jeweiligen Metallbehälters.

Die EP 2 522 473 B1 offenbart eine Beschneidevorrichtung für Metallhohlkörper, insbesondere Aerosoldosen, gemäß dem Oberbegriff des Anspruchs 1, mit einer Aufnahmeeinrichtung, die für eine Festlegung eines Metallhohlkörpers während eines Beschneidevorgangs ausgebildet ist und mit einer Schneideinrichtung, die für eine Durchführung des Beschneidevorgangs am Metallhohlkörper ausgebildet ist, sowie mit einer Antriebseinrichtung, die für eine Bereitstellung einer Förderbewegung für die Aufnahmeeinrichtung zwischen einer Ladestation und einer Entladestation ausgebildet ist, wobei die Aufnahmeeinrichtung und die Schneideinrichtung derart bewegbar sind, dass zumindest während des Beschneidevorgangs ein abschnittsweise gleichsinniger Bewegungsverlauf der Aufnahmeeinrichtung und der Schneideinrichtung gewährleistet ist. Zudem offenbart die EP2522473 B1 ein Verfahren gemäß dem Oberbegriff des Anspruchs 11.

Aus der EP 2 574 421 A1 ist eine Bearbeitungsvorrichtung für Behälterrohlinge bekannt, diese umfasst ein Maschinenbett, eine Zufuhreinrichtung für eine Zuführung von Behälterrohlingen, eine Abfuhreinrichtung für einen Abtransport von Behälterrohlingen, einen drehbar gelagerten Werkstückrundtisch mit mehreren Aufnahmeeinrichtungen, die für eine zeitweilige Festlegung von Behälterrohlingen und für einen Transport von Behälterrohlingen entlang eines kreisbahnabschnittsförmigen Transportwegs zwischen der Zufuhreinrichtung und der Abfuhreinrichtung ausgebildet sind, wobei der Transportweg einen ersten, kreissegmentförmigen Flächenabschnitt bestimmt, mehrere dem Werkstückrundtisch in radialer Richtung gegenüberliegende Arbeitseinrichtungen, die zur Bearbeitung von am Werkstückrundtisch aufgenommenen Behälterrohlingen ausgebildet sind, und wenigstens eine Fördereinrichtung, die für eine Förderung von Komponenten von Behälterrohlingen und/oder für Behälterrohlinge entlang einer Förderstrecke zwischen einer Komponentenaufnahme und einer zugeordneten Arbeitseinrichtung ausgebildet ist, wobei die Komponentenaufnahme der Fördereinrichtung in einem zweiten, kreissegmentförmigen Flächenabschnitt angeordnet ist, der den vom kreisbahnabschnittsförmigen Transportweg bestimmten ersten Flächenabschnitt zu einem Vollkreis ergänzt.

Die WO 2013/140166 offenbart ein Laserschneidsystem zum Beschneiden eines Gegenstandes wie einer Dose, mit einem drehbaren Träger mit mehreren Stationen zum Aufnehmen mehrerer zu trimmender Gegenstände, einer Laserabtastvorrichtung zur Bereitstellung eines Laser-Trimmstrahls, wobei der Träger einen Gegenstand, der beschnitten werden soll, bereitstellt und den Gegenstand in seiner Station unter Einwirkung des Trimmstrahls drehen kann, um einen Teil des Gegenstandes (301) abzuschneiden, wobei der Trimmstrahl von einem Quellenlaserstrahl parallel zu einer ersten Achse abgeleitet wird, wobei der Trimmstrahl parallel zu einer zweiten Achse ist, die sich von der ersten unterscheidet.

Die Aufgabe der Erfindung besteht darin, eine Beschneidevorrichtung und ein Verfahren zum Beschneiden von Metallhohlkörpern bereitzustellen, die eine präzisere Bearbeitung der Metallhohlkörper ermöglichen.

Diese Aufgabe wird gemäß einem ersten Erfindungsaspekt für eine Beschneidevorrichtung der eingangs genannten Art mit den Merkmalen des Anspruchs 1 gelöst.

Bei den zu bearbeitenden Metallhohlkörpern handelt es sich vorzugsweise um Rohlinge für die Herstellung von Aerosoldosen, die beispielsweise aus Stahl in einem Tiefziehverfahren oder aus Aluminium in einem Fließdruckpressverfahren hergestellt werden und die im Wesentlichen becherförmig ausgeführt sind. Aufgrund des jeweils gewählten Herstellungsverfahrens weisen die Metallhohlkörper im Öffnungsbereich, also am umlaufenden bodenfernen Rand der becherförmigen Kontur, keine exakt zur Mittelachse, insbesondere Rotationssymmetrieachse, verlaufende Kante auf. Diese Kante muss daher vor der Durchführung weiterer Bearbeitungsschritte, insbesondere eines Einziehvorgangs, für den Metallhohlkörper, beschnitten werden.

Der Beschneidevorgang erfolgt mit Hilfe der erfindungsgemäßen Beschneidevorrichtung in einem diskontinuierlichen Bearbeitungsvorgang. Hierbei werden die Metallhohlkörper an einer Ladestation oder Einlaufstation am Werkstückrundtisch aufgenommen und im Zuge von Drehschrittbewegungen an der Schneideinrichtung zur Durchführung des Schneidvorgangs vorbeigeführt und bis zu einer Entladestation oder Auslaufstation gefördert, wo sie vom Werkstückrundtisch entnommen werden. Die Schneideinrichtung ist derart am Maschinengestell angeordnet, dass sie eine Bearbeitung des Metallhohlkörpers an einer vorgebbaren Bearbeitungspositionen durchführt, die vorzugsweise mit einer Stillstandsposition für die Drehschrittbewegung des Werkstückrundtischs übereinstimmt.

Eine Drehschrittbewegung umfasst eine Abfolge von Schwenkbewegungen des Werkstückrundtischs um die Drehachse, wobei die aufeinanderfolgenden Schwenkbewegungen vorzugsweise jeweils mit gleichem Schwenkwinkel durchgeführt werden. Zwischen den Schwenkbewegungen erfolgt jeweils ein zumindest nahezu vollständiger Stillstand des Werkstückrundtischs. Während dieser Stillstandsphasen erfolgt an wenigstens einer Stillstandsposition eine Bearbeitung der Metallhohlkörper, insbesondere ein Beschneidevorgang für die Metallhohlkörper. Die Bereitstellung einer Drehschrittbewegung für den Werkstückrundtisch ermöglicht eine einfache und kostengünstige Gestaltung der Schneideinrichtung, die zumindest während des jeweiligen Schneidvorgangs, abgesehen von möglicherweise vorgesehenen geringfügigen Einstellbewegungen, ortsfest gegenüber dem Maschinengestell und dem Metallhohlkörper angeordnet ist und nicht in synchroner Weise mit den zu bearbeitenden Metallhohlkörper mitgeführt werden muss, wie dies beispielsweise aus der EP 2 522 473 B1 bekannt ist. Trotz der ungleichmäßigen Bewegung für die Metallhohlkörper kann mit einer Drehschrittbewegung für den Werkstückrundtisch bei Verwendung einer Schneideinrichtung, die zur Bereitstellung eines Schneidstrahls, insbesondere Laserstrahls, ausgebildet ist, mit hohen Taktzahlen für die Bearbeitung der Metallhohlkörper gearbeitet werden. Exemplarisch ist davon auszugehen, dass bis zu 250 Metallhohlkörper pro Minute mit einer solchen Beschneidevorrichtung beschnitten werden können.

Zweckmäßig ist es, wenn die Antriebseinrichtung als getriebeloser, elektrischer Direktantrieb ausgebildet ist. Dies ermöglicht eine flexible Anpassung der Drehschrittbewegung für den Werkstückrundtisch an die Art und Anzahl der in den Stillstandsphasen vorzunehmenden Bearbeitungsvorgänge und/oder an die Größe der Metallhohlkörper und/oder an die Bearbeitungsgeschwindigkeit für die jeweiligen Bearbeitungsvorgänge. Dabei umfasst ein elektrischer Direktantrieb vorzugsweise einen mit dem Maschinengestell verbundenen Stator und einen drehbeweglich am Stator gelagerten Rotor und kann als Innenläufer oder Außenläufer ausgebildet sein. Eine Drehbewegung des beispielsweise als Bestandteil eines Asynchronmotors ausgebildeten Rotors gegenüber dem Stator erfolgt exemplarisch durch Bereitstellung von elektrischer Energie, die in ein elektromagnetisches Wanderfeld gewandelt wird, an den beispielsweise als Bestandteil eines Asynchronmotors ausgebildeten Stator. Ferner kann mit Hilfe eines Direktantriebs eine variable Anpassung einer Beschleunigung des Werkstückrundtischs aus der Stillstandsphase in die Drehschrittbewegung und/oder eine Abbremsung des Werkstückrundtischs aus der Drehschrittbewegung in die Stillstandsphase und/oder ein Schwenkwinkel für die Drehschrittbewegung in weiten Bereichen frei gewählt werden.

Erfindungsgemäß umfasst die Aufnahmeeinrichtung ein drehbar um eine Bearbeitungsachse am Werkstückrundtisch gelagertes Spannmittel, das für eine Aufnahme eines Bereichs, insbesondere eines Außenbereichs, des Metallhohlkörpers ausgebildet ist. Durch eine drehbare Lagerung des Spannmittels kann der im Spannmittel aufgenommene Metallhohlkörper um eine Körperachse, insbesondere um eine Rotationssymmetrieachse, rotiert werden. Damit kann ein zirkular umlaufender, vorzugsweise zylindermantelförmiger, Oberflächenbereich des Metallhohlkörpers an der Schneideinrichtung vorbeigeführt werden, um den gewünschten Beschneidevorgang durchzuführen. Dementsprechend ist vorzugsweise vorgesehen, dass die Bearbeitungsachse des Spannmittels zumindest im Wesentlichen der Körperachse des Metallhohlkörpers entspricht, insbesondere konzentrisch hierzu angeordnet ist. Bei dem Spannmittel handelt es sich vorzugsweise um eine Spannzange, die zumindest einen elastisch ausgebildeten Bereich umfasst, der zur Anlage an dem Metallhohlkörper, insbesondere an einem Außenbereich des Metallhohlkörpers, ausgebildet ist. Exemplarisch umfasst das Spannmittel hierzu einen Spanneinsatz, der beispielhaft als geschlitztes Kunststoffteil ausgebildet ist und eine passive, elastische und damit kraftschlüssiger Festlegung des Metallhohlkörpers im Spannmittel gewährleistet. Alternativ kann dem Spannmittel ein Aktor zugeordnet sein, der eine wahlweise Erhöhung oder Reduzierung von Spannkräften auf den Metallhohlkörper in Abhängigkeit vom Bearbeitungsverlauf für den Metallhohlkörper ermöglicht.

In weiterer Ausgestaltung der Erfindung ist vorgesehen, dass die Aufnahmeeinrichtung ein benachbart zum Spannmittel angeordnetes, längs der Bearbeitungsachse erstrecktes Haltemittel umfasst, das eine längs der Bearbeitungsachse ersteckte Haftfläche für einen Metallhohlkörper mit einer zylinderabschnittsförmigen Profilierung aufweist, wobei eine Profilachse der Haftfläche parallel, insbesondere konzentrisch oder exzentrisch, zur Bearbeitungsachse ausgerichtet ist.

Eine Profilierung der Haftfläche ist an die Außenfläche des Metallhohlkörpers angepasst, vorzugsweise weist der Metallhohlkörper eine zylindrische Außenfläche auf, so dass die Profilierung der Haftfläche beispielhaft zylinderhülsenabschnittsförmig ausgebildet sein kann. Dabei verläuft eine Profilachse der Haftfläche parallel, insbesondere exzentrisch oder konzentrisch, zur Bearbeitungsachse des Spannmittels. Vorzugsweise sind die Profilierung der Haftfläche und die Lage der Bearbeitungsachse des Spannmittels derart auf die Geometrie des Metallhohlkörpers angepasst, dass bei einer linearen Verlagerung des Metallhohlkörpers von der Haftfläche in das Spannmittel ein zumindest geringfügiger Abstand zwischen der Außenfläche des Metallhohlkörpers und der Haftfläche eingenommen wird, um bei der nachfolgenden Rotation des Metallhohlkörpers im Spannmittel einen Reibkontakt mit der Haftfläche zu verhindern.

Die Haftfläche des Haltemittels wird insbesondere bei der Zufuhr der Metallhohlkörper an den Werkstückrundtisch genutzt, bei der die Metallhohlkörper beispielhaft von einem Förderband oder einer Förderkette mit Hilfe eines sogenannten Ladesterns abgehoben werden und an den Werkstückrundtisch bereitgestellt werden. Dabei besteht die Aufgabe des Ladesterns darin, die im Wesentlichen kontinuierlich bereitgestellten Metallhohlkörper jeweils während den Stillstandsphasen des Werkstückrundtischs der jeweiligen Aufnahmeeinrichtung zuzuführen. Da zumindest bei höheren Bearbeitungsgeschwindigkeiten aus Zeitgründen während einer einzigen Stillstandsphase keine direkte Zufuhr des Metallhohlköpers in das jeweilige Spannmittel erfolgen kann, wird der Metallhohlkörper vom Ladestern zunächst an die jeweilige Haftfläche der Aufnahmeeinrichtung zugeführt. Diese ist derart eingerichtet, dass der Metallhohlkörper bei der nachfolgenden Durchführung der Drehschrittbewegung zuverlässig am Haltemittel anhaftet und beispielsweise während einer nachfolgenden Stillstandsphase in das jeweilige Spannmittel eingeschoben werden kann. Bei einer Bearbeitung von Metallhohlkörpern mit ferromagnetischen Legierungsanteilen kann exemplarisch vorgesehen sein, dass die Haftfläche mit elektrisch betreibbaren Magnetspulen und/oder Permanentmagneten ausgerüstet ist, um eine Magnethaftung am Haltemittel zu bewirken. Bei einer Bearbeitung von Metallhohlkörpern ohne diesbezügliche magnetische Eigenschaften ist vorzugsweise eine Anhaftung der Metallhohlkörper an der Haftfläche mit Hilfe von Unterdruck vorgesehen.

Hierzu ist die Haftfläche vorzugsweise von Ausnehmungen durchsetzt, die mit einem im Werkstückrundtisch ausgebildeten Saugkanal in fluidisch kommunizierender Verbindung stehen und die für eine Unterdruckbeaufschlagung der Haftfläche zur Anhaftung des Metallhohlkörpers ausgebildet sind. Besonders bevorzugt ist vorgesehen, dass der Saugkanal am Maschinengestell fortgesetzt wird und mit einer Saugeinrichtung, insbesondere einem Absauggebläse, verbunden ist. Ferner kann beispielhaft vorgesehen sein, dass der Saugkanal am Maschinengestell und der Saugkanal im Werkstückrundtisch durch eine abdichtende Drehverbindung fluidisch kommunizierend miteinander verbunden sind.

Ferner ist erfindungsgemäß vorgesehen, dass das drehbar um die Bearbeitungsachse am Werkstückrundtisch gelagerte Spannmittel ein Reibrad umfasst und dass dem Werkstückrundtisch ein Riemenantrieb mit einem umlaufenden Treibriemen zugeordnet ist, der für eine Bewegungseinkopplung auf das Reibrad ausgebildet ist. Durch eine Wechselwirkung des dem Spannmittel zugeordneten Reibrads mit dem angetriebenen, umlaufenden Treibriemen des Riemenantriebs kann in einfacher Weise eine Rotationsbewegung des Spannmittels hervorgerufen werden, ohne dass dazu jedem Spannmittel ein eigener Antrieb zugeordnet werden muss. Vorzugsweise ist der Riemenantrieb mit einem Elektromotor ausgestattet, der eine vorzugsweise kontinuierliche Umlaufbewegung des Treibriemens bewirkt. Das Reibrad kann insbesondere an einer dem Haltemittel entgegengesetzten Seite des Spannmittels angeordnet sein und ist beispielsweise zylindrisch ausgeführt, wobei eine Mittelachse des Reibrads konzentrisch zur Bearbeitungsachse des Spannmittels ausgerichtet ist.

Zweckmäßig ist es, wenn der Riemenantrieb für eine gleichzeitige Bewegungseinkopplung auf mehrere, insbesondere zwei, Spannmittel ausgebildet ist und zwei Umlenkrollen umfasst, deren Rotationsachsen derart in radialer Richtung nach außen beabstandet zu einem Umkreis um die Reibräder des Werkstückrundtischs angeordnet sind, dass der Treibriemen zwischen den beiden Umlenkrollen an mehreren Reibrädern anliegt. Vorzugsweise ist vorgesehen, dass der Riemenantrieb derart am Maschinengestell angeordnet ist, dass der Treibriemen sowohl dasjenige Spannmittel und den darin aufgenommenen Metallhohlkörper in Rotation versetzen kann, die gegenüberliegend zur Schneideinrichtung angeordnet sind, als auch zumindest das benachbarte Spannmittel, das im Zuge der nächsten Drehschrittbewegung des Werkstückrundtischs gegenüberliegend zur Schneideinrichtung angeordnet wird. Hierdurch wird gewährleistet, dass der Metallhohlkörper bereits beim Eintreffen an der Schneideinrichtung auf die für den Schneidvorgang erforderliche Rotationsgeschwindigkeit beschleunigt ist, wodurch eine raschere Schneidbearbeitung der Metallhohlkörper gewährleistet werden kann. Hierzu ist es vorteilhaft, wenn der flexibel ausgebildete Treibriemen mit Hilfe von Umlenkrollen des Riemenantriebs in einer Weise geführt ist, dass er ohne ein Vorhandensein der Reibräder am Werkstückrundtisch eine Sekante bezogen auf einen konzentrisch zur Drehachse ausgerichteten Kreis bildet, auf dem die Bearbeitungsachsen der Spannmittel angeordnet sind. Aufgrund der radialen Beabstandung der Umlenkrollen für den Treibriemen gegenüber einem Umkreis für die Reibräder wird gewährleistet, dass kein unmittelbarer Kontakt zwischen den Reibrädern einerseits und den Umlenkrollen andererseits stattfindet, vielmehr liegen die Reibräder ausschließlich am flexibel ausgebildeten Treibriemen an.

In weiterer Ausgestaltung der Erfindung ist vorgesehen, dass am Maschinengestell ein parallel zur Drehachse linearbeweglich gelagerter Einschubstößel angeordnet ist, der zur Bereitstellung einer Einschubbewegung für den Metallhohlkörper von der Haftfläche in das Spannmittel ausgebildet ist. Vorzugsweise ist der Einschubstößel an einer Stillstandsposition für den Werkstückrundtisch angeordnet, die unmittelbar auf diejenige Stillstandsposition folgt, an der eine Zufuhr des jeweiligen Metallhohlkörpers an das zugeordnete Haltemittel der Aufnahmeeinrichtung erfolgt. Exemplarisch ist der Einschubstößel dazu ausgebildet, eine Druckkraft auf einen Bodenbereich des becherförmigen Metallhohlkörpers auszuüben, um den am Haltemittel aufgenommenen Metallhohlkörper in das jeweilige Spannmittel einzuschieben. Alternativ kann vorgesehen sein, dass der Einschubstößel für eine Krafteinleitung auf den Öffnungsbereich des Metallhohlkörpers ausgebildet ist. Vorzugsweise ist vorgesehen, dass der Einschubstößel von einem Linearsteller, insbesondere einem Fluidzylinder, angetrieben wird oder unmittelbar als Bestandteil einer Kolbenstange eines Fluidzylinders ausgebildet ist.

Bei einer vorteilhaften Weiterbildung der Erfindung ist vorgesehen, dass den Spannmitteln jeweils ein parallel zur Drehachse linearbeweglich gelagerter Ausschubstößel zugeordnet ist, der zur Bereitstellung einer Ausschubbewegung für den Metallhohlkörper aus dem Spannmittel ausgebildet ist und dass am Maschinengestell eine Steuerkurve für die Ausschubstößel ausgebildet ist, an der Endbereiche der Ausschubstößel anliegen. Die Aufgabe des Ausschubstößels besteht darin, den Metallhohlkörper nach Durchführung des Bearbeitungsvorgangs an der Entladestation des Werkstückrundtischs aus dem jeweiligen Spannmittel auszuschieben und damit einen Zugriff einer Fördereinrichtung, insbesondere eines Entladesterns, auf den Metallhohlkörper zu ermöglichen. Exemplarisch kann vorgesehen sein, dass der Metallhohlkörper mit Hilfe des Ausschubstößels in Anlage am Haltemittel gebracht wird, von dem er mittels der Fördereinrichtung abgenommen und abtransportiert werden kann.

Bevorzugt ist vorgesehen, dass eine vom Schneidstrahl bestimmte Schneidachse der Schneideinrichtung einen Winkel in einem Bereich von 60 Grad bis 120 Grad, insbesondere 90 Grad, zur Bearbeitungsachse einnimmt. Die Schneidachse entspricht somit der Strahlrichtung des von der Schneideinrichtung ausgegebenen Schneidstrahls. Je nach Ausrichtung des Schneidstrahls wird eine Schneidkante am Metallhohlkörper wahlweise senkrecht zur Bearbeitungsachse oder in einem von 90 Grad abweichenden Winkel zur Bearbeitungsachse erstellt. Beispielsweise kann vorgesehen sein, dass die Schneidachse derart gegenüber dem Metallhohlkörper ausgerichtet wird, dass sich im Öffnungsbereich des Metallhohlkörpers eine nach innen weisende konische Verjüngung für die Wandung des Metallhohlkörpers ergibt, die eine nachfolgende Bearbeitung des Metallhohlkörpers, beispielsweise im Rahmen eines Einziehvorgangs, erleichtert.

Vorteilhaft ist es, wenn dem Maschinengestell eine Einstelleinrichtung zugeordnet ist, die für eine Einstellung einer relativen Position zwischen Werkstückrundtisch und Schneideinrichtung längs der Drehachse des Werkstückrundtischs ausgebildet ist. Mit Hilfe der Einstelleinrichtung, bei der es sich um einen fluidisch oder elektrisch betreibbaren Aktor, insbesondere um einen elektrischen Spindelantrieb, handeln kann, wird eine Einstellung einer Schneidposition für die Schneideinrichtung gegenüber den am Werkstückrundtisch aufzunehmenden Metallhohlkörpern ermöglicht. Beispielsweise wird hierdurch eine Einstellung der Länge des beschnittenen Metallhohlkörpers ermöglicht.

Vorzugsweise ist der Aufnahmeeinrichtung ein Sensormittel zur Ermittlung wenigstens einer physikalischen Eigenschaft des Metallhohlköpers, insbesondere einer Temperatur oder Längenausdehnung des Metallhohlkörpers, zugeordnet, die zur Bereitstellung eines Sensorsignals ausgebildet ist, und dass eine Steuereinrichtung zur Verarbeitung des Sensorsignals und zur Bereitstellung eines Steuersignals an einen Aktor ausgebildet ist, wobei der Aktor mit der Einstelleinrichtung für eine automatisierte Einstellung einer Schneidposition gekoppelt ist. Da die beschnittenen Metallhohlkörper üblicherweise weiteren Bearbeitungsprozessen zugeführt werden, in denen eine Gesamtlänge des jeweiligen Metallhohlkörpers von erheblicher Bedeutung ist, beispielsweise bei einem nachfolgenden Einziehverfahren für die Metallhohlkörper, ist eine präzise Einhaltung einer vorgegebenen Toleranz für die Gesamtlänge erforderlich. Mit Hilfe des Sensormittels, bei dem es sich insbesondere um einen kontaktlos messenden Temperatursensor handeln kann, wird eine möglicherweise vorliegende überdurchschnittliche oder unterdurchschnittliche Temperatur und eine damit verknüpfte Ausdehnung des jeweiligen Metallhohlkörpers ermittelt und kann bei der Durchführung des Schneidvorgangs berücksichtigt werden. Hierzu ist vorgesehen, dass ein vom Sensormittel bereitgestelltes Sensorsignal in der Steuereinrichtung verarbeitet wird und eine möglicherweise notwendige Kompensation der Gesamtlänge für den jeweiligen Metallhohlkörper durch Veränderung der relativen Lage zwischen Werkstückrundtisch und Schneideinrichtung erfolgt. Hierzu wird von der Steuereinrichtung ein entsprechendes Steuersignal an einen Aktor bereitgestellt, der mit der Einstelleinrichtung gekoppelt ist und dementsprechend eine relative Verlagerung der Schneideinrichtung gegenüber dem Werkstückrundtisch ermöglicht.

Die Aufgabe der Erfindung wird gemäß einem zweiten Erfindungsaspekt mit einem Verfahren zum Beschneiden eines Metallhohlkörpers gelöst, wie es im Anspruch 11 angegeben ist. Dabei wird eine Schneideinrichtung, die zur Bereitstellung eines Schneidstrahls, insbesondere eines Laserstrahls, für einen berührungslosen Beschneidevorgang am Metallhohlkörper ausgebildet ist, in der folgenden Weise betrieben: Bereitstellen des Metallhohlkörpers an ein Spannmittel, das drehbeweglich an einem Werkstückrundtisch aufgenommen ist, an einer Beladeposition, Durchführen wenigstens einer Drehschrittbewegung für den Werkstückrundtisch zur Bewegung des Metallhohlkörpers von der Beladeposition zu einer Bewegungsposition, Einleiten einer kontinuierlichen Rotationsbewegung auf den am Spannmittel aufgenommenen Metallhohlkörper, Durchführen wenigstens einer Drehschrittbewegung für den Werkstückrundtisch zur Bewegung des Metallhohlkörpers von der Bewegungsposition zu einer Schneidposition, Durchführen des berührungslosen Beschneidevorgangs unter Beibehaltung der kontinuierlichen Rotationsbewegung für den am Spannmittel aufgenommenen Metallhohlkörper, Durchführen wenigstens einer Drehschrittbewegung für den Werkstückrundtisch zur Bewegung des Metallhohlkörpers von der Schneidposition zu einer Entladeposition und Entladen des Metallhohlkörpers.

Bei einer vorteilhaften Weiterbildung des Verfahrens ist vorgesehen, dass eine Einstellung einer Schnittlänge für den Metallhohlkörper, insbesondere in Abhängigkeit von einem Sensorsignal eines zur Ermittlung wenigstens einer physikalischen Eigenschaft des Metallhohlköpers, insbesondere einer Temperatur oder Längenausdehnung des Metallhohlkörpers, ausgebildeten Sensormittels, durch eine relative Verlagerung der Schneideinrichtung gegenüber dem Werkstückrundtisch längs der Drehachse des Werkstückrundtischs vorgenommen wird.

Eine vorteilhafte Ausführungsform der Erfindung ist in der Zeichnung dargestellt. Hierbei zeigt:
- Figur 1: eine schematische Vorderansicht einer stark vereinfacht dargestellten Beschneidevorrichtung,
- Figur 2: eine schematische Seitenansicht auf einen Werkstückrundtisch der Beschneidevorrichtung gemäß der Figur 1,
- Figur 3: eine Detaildarstellung des Werkstückrundtischs gemäß der Figur 2,
- Figur 4: eine Detaildarstellung eines Öffnungsbereichs des Metallhohlkörpers mit einer ersten Ausführungsform einer geplanten Schnittkante,
- Figur 5: eine Detaildarstellung eines Öffnungsbereichs des Metallhohlkörpers mit einer zweiten Ausführungsform einer geplanten Schnittkante,
- Figur 6: eine detaillierte Darstellung einer Seitenansicht auf die Beschneidevorrichtung gemäß der Figur 1.

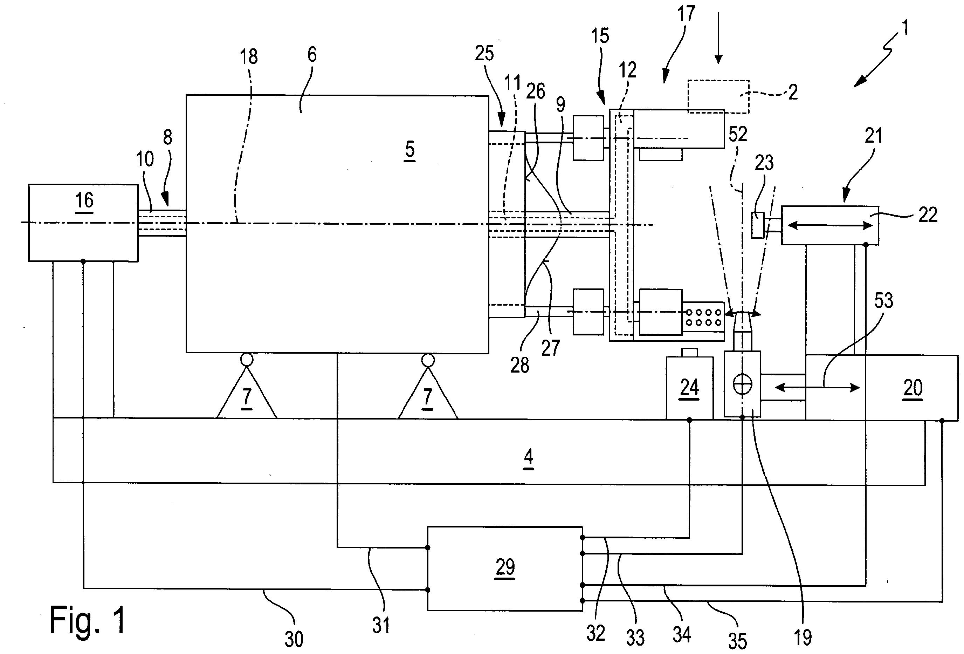

Eine in der Figur 1 rein schematisch und stark vereinfacht dargestellte Beschneidevorrichtung 1 dient zum Beschneiden von Metallhohlkörpern 2, insbesondere einseitig offenen zylinderhülsenförmigen Rohlingen für Aerosoldosen mit einem eben ausgeführten oder konkav eingeprägten Bodenbereich. Für die nachstehende Beschreibung der Beschneidevorrichtung 1 wird rein exemplarisch davon ausgegangen, dass die Metallhohlkörper 2 in vertikaler Richtung von oben mittels einer nicht näher dargestellten Fördereinrichtung antransportiert werden und, gemäß der Darstellung der Figur 1, in horizontaler Richtung nach hinten in die Bildebene von einer ebenfalls nicht dargestellten Fördereinrichtung abtransportiert werden. Andere Möglichkeiten der Zufuhr und der Abfuhr der Metallhohlkörper 2 sind hierdurch nicht ausgeschlossen.

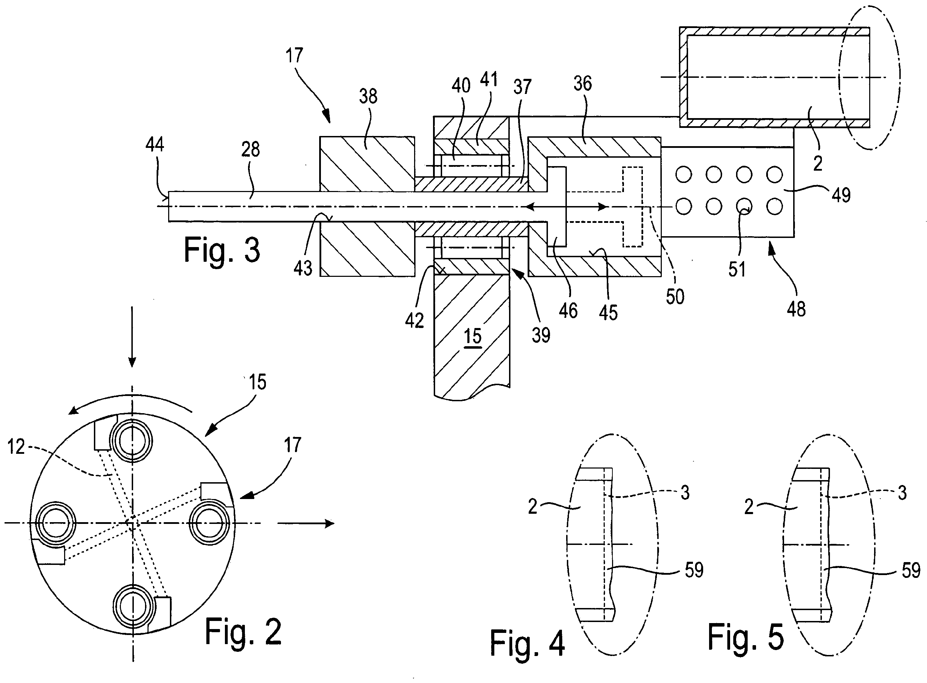

Die Aufgabe der Beschneidevorrichtung 1 besteht darin, einen in den Figuren 3, 4 und 5 detailliert dargestellten Randbereich an der Mündungsöffnung des zylinderhülsenförmigen Metallhohlkörpers 2 mit einer vorgebbaren Schnittkante 3 zu versehen, die für eine präzise Weiterbearbeitung des Metallhohlkörpers 2 in nicht dargestellten Bearbeitungsmaschinen, insbesondere einer Einziehmaschine, erforderlich ist.

Rein exemplarisch umfasst die Beschneidevorrichtung 1 ein Maschinengestell 4, bei dem es sich beispielsweise um ein Maschinenbett aus Metall handeln kann und das beispielhaft plattenförmig ausgebildet ist. An dem Maschinengestell 4 ist eine Antriebseinrichtung 5 ortsfest angebracht, bei der es sich exemplarisch um einen elektrischen Direktantrieb, insbesondere einen Asynchronmotor, handelt. Die Antriebseinrichtung 5 umfasst beispielhaft einen rohrförmigen Stator 6, der mit Lagerböcken 7 am Maschinengestell 4 festgelegt ist. Im Stator 6 ist ein nicht näher dargestellter Rotor drehbar gelagert aufgenommen, der mit einer Antriebswelle 8 verbunden ist. Dabei ragen beidseitig des Stators 6 jeweils Wellenabschnitte 9, 10 in axialer Richtung über den Stator 6 hinaus, deren Funktion nachstehend näher erläutert wird.

Beispielhaft ist vorgesehen, dass die Antriebswelle 8 zumindest nahezu über ihre gesamte Länge von einem Saugkanal 11 durchsetzt ist, der im Bereich des vorderen Wellenabschnitts 9 kommunizierend mit Saugkanälen 12 eines exemplarisch kreisförmigen Werkstückrundtischs 15 verbunden ist. Im Bereich des hinteren Wellenabschnitts 10 steht der Saugkanal 11 in fluidisch kommunizierender Verbindung mit einer Saueinrichtung 16, bei der es sich beispielhaft um ein Sauggebläse handeln kann. Die Aufgabe der Saugeinrichtung 16 besteht in der Bereitstellung eines Unterdrucks an die Saugkanäle 11, 12.

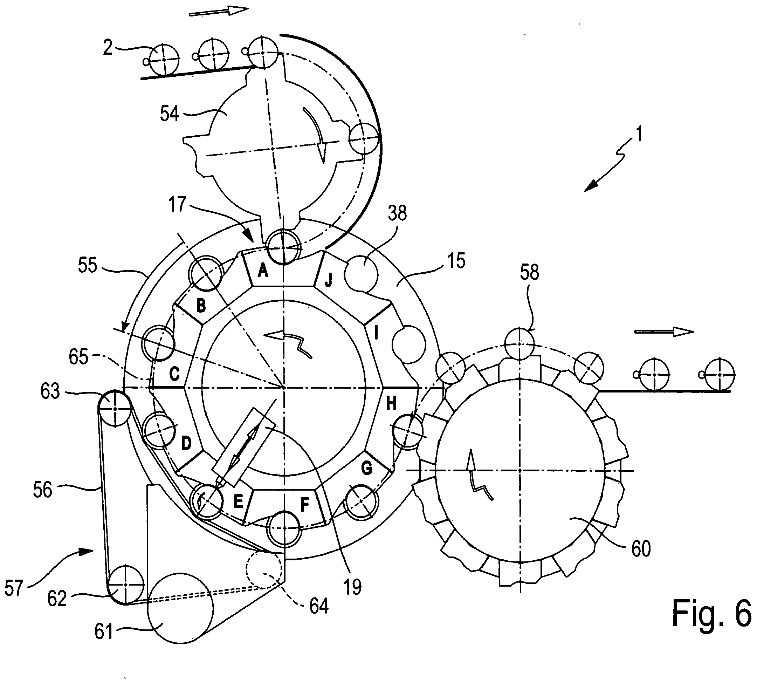

Der in den Figuren 1 bis 3 dargestellte, drehfest mit dem Wellenabschnitt 9 verbundene Werkstückrundtisch 15 trägt mehrere Aufnahmeeinrichtungen 17, die jeweils für eine zeitweilige Festlegung von Metallhohlkörpern 2 zur Durchführung des jeweiligen Bearbeitungsvorgangs ausgebildet sind. Aus Gründen der Vereinfachung sind in den Figuren 1 bis 3 nur wenige Aufnahmeeinrichtung 17 dargestellt, eine wirklichkeitsnahe Darstellung der Anordnung von Aufnahmeeinrichtungen 17 geht aus der Figur 6 hervor, auf die nachstehend näher eingegangen wird.

Mit Hilfe der Antriebseinrichtung 5 kann eine Rotation des Werkstückrundtischs 15 um eine Drehachse 18 bewirkt werden, wobei diese Rotation als Drehschrittbewegung, also als Abfolge von Schwenkbewegungen und Stillstandsphasen, insbesondere in einer einzigen Drehrichtung, durchgeführt wird. Im Zuge dieser Abfolge von Drehschrittbewegungen können Metallhohlkörper 2 an einer Schneideinrichtung 19 vorbeigeführt werden, wobei die Schneideinrichtung 19 zur Bereitstellung eines Schneidstrahls, insbesondere eines Laserstrahls, ausgebildet ist, um eine Bearbeitung des Metallhohlkörpers 2 zu ermöglichen.

Beispielhaft ist vorgesehen, dass die Schneideinrichtung 19 an einer als Linearaktor, insbesondere als elektrischer Spindelantrieb, ausgebildeten Einstelleinrichtung 20 angebracht ist, mit deren Hilfe eine axiale Verlagerung der Schneideinrichtung 19 längs der Drehachse 18 ermöglicht wird, um eine Schneidposition der Schneideinrichtung 19 relativ zu den in den Aufnahmeeinrichtungen 17 aufgenommenen Metallhohlkörpern 2 zu ermöglichen. Ergänzend kann vorgesehen sein, dass die Schneideinrichtung 19 um eine normal zur Darstellungsebene gemäß der Figur 1 ausgerichtete Schwenkachse verschwenkt werden kann, um gegenüber dem Metallhohlkörper 2 unterschiedliche Ausrichtungen der Schneidachse 52 zu ermöglichen. Ferner kann ergänzend oder alternativ eine Einstellmöglichkeit für die Schneideinrichtung 19 längs der Schneidachse 52 vorgesehen werden, um eine Anpassung an unterschiedliche Durchmesser der Metallhohlkörper 2 zu ermöglichen, wie dies durch den Doppelpfeil 53 in der Figur 1 angedeutet ist.

Ferner kann beispielhaft vorgesehen sein, dass am Maschinengestell 4 eine Einschubeinrichtung 21 angebracht ist, die im Wesentlichen einen Aktor 22, insbesondere einem Pneumatikzylinder, und einen mit dem Aktor 22 gekoppelten Einschubstößel 23 umfasst. Dabei kann der Einschubstößel 23 aus der dargestellten Ruhestellung linear , insbesondere parallel zur Drehachse 18, in Richtung der Aufnahmeeinrichtung 17 bewegt werden, um den Metallhohlkörper 2 für den vorgesehenen Bearbeitungsschritt in die Aufnahmeeinrichtung 17 einzuschieben.

Ergänzend kann vorgesehen sein, dass im Bereich der Schneideinrichtung 19 ein Sensormittel 24 angeordnet ist, bei dem es sich beispielsweise um einen kontaktlos arbeitenden Temperatursensor handeln, der zur Ermittlung einer Temperatur des Metallhohlkörpers 2 ausgebildet ist.

An einer dem Werkstückrundtisch 15 zugewandten Stirnseite des Stators 6 ist rein exemplarisch eine kreisringförmig ausgebildete Steuerkontur 25 angebracht. Die Steuerkontur 25 weist im Bereich einer gemäß der Darstellung der Figur 1 vor der Antriebswelle 8 liegenden vorderen Ringhälfte eine ebene Stirnfläche 26 auf. Die Steuerkontur 25 weist im Bereich einer gemäß der Darstellung der Figur 1 hinter der Antriebswelle 8 liegenden hinteren Ringhälfte eine kurvenförmige Stirnfläche 27 mit bereichsweise verringertem Abstand gegenüber dem Werkstückrundtisch 15 auf. An den Stirnflächen 26, 27 der Steuerkontur 25 liegen den Aufnahmeeinrichtungen 17 zugehörige Ausschubstößel 28 an, die während einer Drehschrittbewegung des Werkstückrundtischs 15 um die Drehachse 18 aufgrund von Wechselwirkungen mit der ebenen Stirnfläche 27 und der kurvenförmigen Stirnfläche 27 linear und parallel zur Drehachse 18 verschoben werden. Beispielhaft ist vorgesehen, dass die Ausschubstößel 28 mit einer nicht näher dargestellten, vorgespannten Federeinrichtung stets gegen die Stirnflächen 26, 27 gepresst werden. Die Wirkungsweise der Ausschubstößel 28 wird im Zusammenhang mit der Figur 3 näher erläutert.

Für einen koordinierten Betrieb der Beschneidevorrichtung 1 ist eine Steuereinrichtung 29 vorgesehen, die über Steuerleitungen 30 bis 35 mit der Fördereinrichtung 16, der Antriebseinrichtung 5, dem Sensormittel 24, der Schneideinrichtung 19, dem Aktor 22 und mit der Einstelleinrichtung 20 verbunden ist und die für eine Bereitstellung von Steuersignalen an die jeweils verbundenen Komponenten ausgebildet ist. Ferner kann die Steuereinrichtung 29 für eine Verarbeitung von Sensorsignalen ausgebildet sein, die vom Sensormittel 24 und gegebenenfalls von weiteren nicht näher dargestellten Sensormitteln in den übrigen Komponenten, beispielsweise einem Drehgeber der Antriebseinrichtung 5 und/oder einem Positionsgeber des Aktors 22 und/oder der Einstelleinrichtung 20, bereitgestellt werden, um gegebenenfalls für zumindest eine oder mehrere der Komponenten 5, 16, 19, 20, 22 einen geregelten Betrieb zu ermöglichen.

Wie der schematischen Detaildarstellung der Figur 3 entnommen werden kann, umfasst die Aufnahmeeinrichtung 17 ein schematisch becherförmig dargestelltes, zur Aufnahme der Metallhohlkörper 2 vorgesehenes Spannmittel 36, einen den exemplarisch plattenförmig ausgebildeten Werkstückrundtisch 15 durchsetzenden Achsabschnitt 37 und ein drehfest mit dem Achsabschnitt 37 verbundenes Reibrad 38. Der Achsabschnitt 37 ist drehbar im Werkstückrundtisch 15 gelagert, hierzu ist ein Wälzlager 39 vorgesehen, dessen Wälzkörper 40 auf einer zylindrischen Außenoberfläche des Achsabschnitts 37 und auf einer zylindrischen Innenoberfläche eines Lagerings 41 abwälzen. Der Lagerring 41 ist hierbei exemplarisch ortsfest in einer Ausnehmung 42 des Werkstückrundtischs 15 eingepresst.

Der Ausschubstößel 28 ist linearbeweglich als auch drehbeweglich in einer Ausnehmung 43 aufgenommen, die das Spannmittel 36, den Achsabschnitt 37 und das Reibrad 38 durchsetzt und liegt, wie bereits obenstehend beschrieben wurde, mit einer dem Spannmittel 36 entgegengesetzten Stirnfläche 44 an den Stirnflächen 26, 27 der Steuerkontur 25 an. In der exemplarisch zylindrisch ausgebildeten Ausnehmung 45 des Spannmittels 36 weist der Ausschubstößel 28 einen tellerförmigen Kontaktbereich 46 auf, der für eine flächige Anlage an einem Bodenbereich 47 des Metallhohlkörpers 2 vorgesehen ist. Hierdurch wird eine flächige Krafteinleitung vom Ausschubstößel 28 auf den Metallhohlkörper 2 ermöglicht, wenn der Ausschubstößel 28 in Anlage zur kurvenförmigen Stirnfläche 27 der Steuerkurve 25 gelangt und aufgrund des bereichsweise verringerten Abstands zwischen der Stirnfläche 27 und dem Werkstückrundtisch 15 eine lineare Verschiebung längs der Drehachse 18 vollzieht.

Neben der drehbar gelagerten und drehfest miteinander verbundenen Kombination von Spannmittel 36, ab Abschnitt 37 und Reibrad 38 umfasst die Aufnahmeeinrichtung 17 ein ortsfest am Werkstückrundtisch 15 festgelegtes Haltemittel 48. Das Haltemittel 48 ist, wie insbesondere aus der Darstellung der Figur 2 entnommen werden kann, mit einer zylinderabschnittsförmigen, konkaven Profilierung 49 versehen, die sich mit konstanten Querschnitt längs der auch als Bearbeitungsachse 50 bezeichneten Rotationsachse des Spannmittels 36 erstreckt. Die Profilierung 49 dient als Haftfläche für die zeitweilige Anhaftung der Metallhohlkörper 2 vor einem Einschieben der Metallhohlkörper 2 in das Spannmittel 36. Hierzu weist das Haltemittel 48 im Bereich der Profilierung 49 mehrere Ausnehmungen 51 auf, die in nicht näher dargestellter Weise in fluidisch kommunizierender Verbindung mit den Saugkanälen 11, 12 stehen und somit unmittelbar von der Fördereinrichtung 16 mit Unterdruck beaufschlagt werden können. Exemplarisch ist vorgesehen, dass die Profilierung 49 konzentrisch zur Ausnehmung 45 des Spannmittels 36 angeordnet ist, jedoch verglichen mit der Ausnehmung 45 einen größeren Radius aufweist. Somit wird ein an der Profilierung 49 anhaftender Metallhohlkörper 2 während eines Einschiebevorgangs in die Ausnehmung 45 des Spannmittels 36 radial versetzt, wodurch den sichergestellt wird, dass bei einer nachfolgenden Rotation des Spannmittels 36 mit dem darin aufgenommenen Metallhohlkörper 2 kein Kontakt des Metallhohlkörpers 2 mit der Profilierung 49 besteht.

Die Darstellung der Figur 6 beinhaltet keine andere Ausführungsform der Erfindung, sondern ist lediglich eine detaillierte Darstellung der in den Figuren 1 bis 5 stark schematisiert dargestellten Komponenten, so dass in der Figur 6 auch die gleichen Bezugszeichen wie in den Figuren 1 bis 5 eingesetzt werden. Während bei der Darstellung der Figur 1 aus Gründen der Übersichtlichkeit von einer radial außenliegenden Anordnung der Schneideinrichtung 19 ausgegangen wurde, ist bei der wirklichkeitsnahen Darstellung der Figur 6 vorgesehen, dass die Schneideinrichtung 19 in radialer Richtung von innen auf die Metallhohlkörper 2 einwirkt.

Wie bereits in Zusammenhang mit der Figur 1 beschrieben wurde, erfolgt auch bei der Darstellung gemäß der Figur 6 exemplarisch eine Zufuhr der Metallhohlkörper 2 an einer Oberseite des Werkstückrundtischs 15 mit Hilfe eines Ladesterns 54 an die auch als Haftfläche bezeichnete Profilierung 49 der Aufnahmeeinrichtung 17 an der Position A. Um eine zuverlässige Aufnahme des Metallhohlkörpers 2 an der Aufnahmeeinrichtung 17 sicherzustellen, ist die Haftfläche stets, also sowohl während der Drehschrittbewegungen als auch während der Stillstandszeiten, unterdruckbeaufschlagt, was über die in den Figuren 1 und 2 näher dargestellten Saugkanäle 11, 12 und die Saugeinrichtung 16 gewährleistet wird.

Vorzugsweise ist eine Haftwirkung durch die Unterdruckbeaufschlagung an der Haftfläche derart gewählt, dass der Metallhohlkörper 2 auch während einer Drehschrittbewegung um einen Schwenkwinkel 55, während der die Aufnahmeeinrichtung 17 von der auch als Beladeposition bezeichneten Position A an die Position verschwenkt wird, zuverlässig an der Aufnahmeeinrichtung 17 aufgenommen bleibt. Sobald die Aufnahmeeinrichtung 17 ausgehend von der Position A die Position B erreicht, kann der Metallhohlkörper 2 mit Hilfe des in der Figur 6 nicht dargestellten, aus der Figur 1 bekannten Einschubstößels 23 in das Spannmittel 36 eingeschoben werden, wo er vorzugsweise kraftschlüssig gehalten wird.

Anschließend erfolgen weitere Drehschrittbewegungen, in deren Zuge die Aufnahmeeinrichtung 17 an die auch als Bewegungsposition bezeichnete Position D gelangt. Am Ende dieser Drehschrittbewegung stellt sich ein Reibschluss des Reibrads 38 mit einem umlaufenden, angetriebenen Treibriemen 56 eines Riemenantriebs 57 ein, wodurch das Spannmittel 36 und der darin aufgenommene Metallhohlkörper 2 in eine Rotationsbewegung um die Bearbeitungsachse 50 versetzt werden. Bei einer weiteren Drehschrittbewegung in die auch als Schneidposition bezeichnete Position E wird der Metallhohlkörper 2 gegenüberliegend zur Schneideinrichtung 19 angeordnet und weiterhin mit Hilfe des Riemenantriebs 57 zumindest im Wesentlichen kontinuierlich in der Drehbewegung um die Bearbeitungsachse 50 gehalten. Bei Aktivierung der Schneideinrichtung 19 erfolgt somit ein Beschneidevorgang für den oberen Rand des Metallhohlkörpers 2, wobei sich in Abhängigkeit von einer Ausrichtung der Schneidachse 52 gegenüber der Drehachse 18 ein Schnittverlauf einstellen kann, wie er exemplarisch in der Figur 4 oder in der Figur 5 dargestellt ist. Vorzugsweise ist vorgesehen, dass eine Aktivierungsdauer für die Schneideinrichtung 19 derart eingestellt wird, dass der Metallhohlkörper 2 während der Aktivierungsdauer der Schneideinrichtung 19 zumindest eine Rotation in einem Drehwinkelbereich größer 360 Grad durchführt, so dass der Schneidstrahl die Außenfläche 58 des Metallhohlkörpers 2 vollständig überstreichen kann.

Im Zuge der Abtrennung von überschüssigem Materials vom Metallhohlkörper 2 kann der hierbei abgetrennte Ring, wie er schematisch in den Figuren 4 oder 5 rechts der angedeuteten Schnittlinie erkennbar ist, insbesondere durch Druckluft, in einem nicht dargestellten Ablaufkanal gefördert werden. Der weiterhin in der Aufnahmeeinrichtung 17 aufgenommene, nunmehr beschnittene Metallhohlkörper 2 wird beispielhaft im Zuge dreier weiterer Drehschrittbewegungen von der Position E zu der auch als Entladeposition bezeichneten Position H und damit zu einem Entladestern 60 gefördert. Durch Wechselwirkung des in der Figur 6 nicht erkennbaren, in der Figur 3 detailliert dargestellten Ausschubstößels 28 mit der ebenfalls in Figur 6 nicht erkennbaren, in Figur 1 sichtbaren Steuerkurve 25 erfolgt eine lineare Verlagerung des Ausschubstößels 28 dahingehend, dass der Metallhohlkörper 2 aus dem Spannmittel 36 ausgeschoben wird und vom Entladestern 60 abtransportiert werden kann. Es versteht sich, dass die vorstehenden angeführten Funktionspositionen A, D, E, H auch in einer anderen Teilung und/oder mit weiteren oder weniger Zwischenpositionen am Werkstückrundtisch 15 angeordnet sein können.

Aufgrund der Verwendung der als elektrischer Direktantrieb ausgebildeten Antriebseinrichtung 5 können Parameter wie eine Beschleunigung aus der Stillstandsposition in die Drehschrittbewegung und/oder eine Abbremsung aus der Drehschrittbewegung in die nachfolgende Stillstandsposition und/oder eine Taktrate für die Drehschrittbewegungen und/oder eine Schrittweite für die Drehschrittbewegungen in gewissen Grenzen eingestellt werden, ohne mechanische Änderungen an der Antriebseinrichtung 5 vornehmen zu müssen. Die nicht dargestellten Antriebseinrichtungen für die Rotationsbewegungen des Ladesterns 54 und des Entladestern 60 sind vorzugsweise ebenfalls als Direktantriebe oder Servomotoren, insbesondere als Asynchronmotoren, ausgebildet und weisen jeweils nicht dargestellte Drehgeber auf, die mit der Steuereinrichtung 29 gekoppelt werden können, um eine synchronisierte Bewegung sämtlicher Förderkomponenten 5, 15, 54 und 60 zu gewährleisten.

Der Riemenantrieb 57 ist ebenfalls mit einem elektrischen Antriebsmotor 61 ausgerüstet, der in nicht näher dargestellter Weise mit der Steuereinrichtung 29 gekoppelt ist, um eine Umlaufgeschwindigkeit des Treibriemens 56 an die Erfordernisse der Schneideinrichtung 19 anpassen zu können. Exemplarisch greift eine nicht dargestellte Reibrolle des Antriebsmotors 61 am Treibriemen 56 an und versetzt diesen in die Umlaufbewegung. Der Treibriemen 56 ist ferner an Umlenkrollen 62, 63 und 64 geführt, die exemplarisch dreiecksförmig angeordnet sind, wobei der Treibriemen 56 von den Umlenkrollen 62 und 63 derart geführt wird, dass er ohne einen Kontakt mit den Reibrädern 38 der jeweiligen Aufnahmeeinrichtungen 17 eine Sekante für einen Umkreis um die Reibräder 38 und für einen Kreis 65 durch die Bearbeitungsachsen 50 bilden würde. Hierdurch ist gewährleistet, dass der Treibriemen 56 aufgrund seiner elastischen Eigenschaften durch Wechselwirkung mit den Reibrädern 38 eine reibschlüssige Bewegungseinleitung auf die jeweiligen Spannmittel 36 ermöglicht.

Vorzugsweise sind die Umlenkrollen 62 und 63 in radialer Richtung derart nach außen beabstandet vom Umkreis um die Reibräder 38 angeordnet, dass ein unmittelbarer Kontakt zu den Reibrädern 38 vermieden wird. Rein exemplarisch ist vorgesehen, dass bei einer Drehschrittbewegung der Aufnahmeeinrichtung 17 aus der Position C in die Position D eine Beschleunigung des Spannmittels 36 mit dem darin aufgenommenen Metallhohlkörper 2 durch Reibschluss mit dem Treibriemen 56 erfolgt. Bei der Drehschrittbewegung aus der Position D in die Position E bleibt das Reibrad stets in reibschlüssiger Verbindung mit dem Treibriemen 56, so dass auch bei Erreichen der Position E bereits die für den Schneidvorgang erforderliche Rotation des Spannmittels 36 um die Bearbeitungsachse 50 gewährleistet ist und eine unmittelbare Durchführung des Schneidvorgangs mit Hilfe der Schneideinrichtung 19 erfolgen kann.

## Patentansprüche

1. Beschneidevorrichtung für Metallhohlkörper (2), insbesondere Aerosoldosen, mit einem Maschinengestell (4), an dem ein Werkstückrundtisch (15) um eine Drehachse (18) drehbar gelagert aufgenommen ist und an dem eine Schneideinrichtung (19) angeordnet ist, wobei der Werkstückrundtisch (15) mehrere Aufnahmeeinrichtungen (17) umfasst, die jeweils für eine Festlegung eines Metallhohlkörpers (2) zur Durchführung eines Beschneidevorgangs ausgebildet sind und wobei die Schneideinrichtung (19) zur Bereitstellung eines Schneidstrahls, insbesondere eines Laserstrahls, für einen berührungslosen Beschneidevorgang am Metallhohlkörper (2) ausgebildet ist, wobei dem Werkstückrundtisch (15) eine Antriebseinrichtung (5) zugeordnet ist, die für eine Bereitstellung einer Drehschrittbewegung an den Werkstückrundtisch (15) ausgebildet ist und wobei die Aufnahmeeinrichtung (17) ein drehbar um eine Bearbeitungsachse (50) am Werkstückrundtisch (15) gelagertes Spannmittel (36) umfasst, das für eine Aufnahme eines Bereichs, insbesondere eines Außenbereichs, des Metallhohlkörpers (2) ausgebildet ist, **dadurch gekennzeichnet, dass** das drehbar um die Bearbeitungsachse (50) am Werkstückrundtisch (15) gelagerte Spannmittel (36) ein Reibrad (38) umfasst und dass dem Werkstückrundtisch (15) ein Riemenantrieb (57) mit einem umlaufenden Treibriemen (56) zugeordnet ist, der für eine Bewegungseinkopplung auf das Reibrad (38) ausgebildet ist.

2. Beschneidevorrichtung nach Anspruch 1, **dadurch gekennzeichnet, dass** die Antriebseinrichtung (5) als getriebeloser, elektrischer Direktantrieb ausgebildet ist.

3. Beschneidevorrichtung nach Anspruch 1, **dadurch gekennzeichnet, dass** die Aufnahmeeinrichtung (17) ein benachbart zum Spannmittel (36) angeordnetes, längs der Bearbeitungsachse erstrecktes Haltemittel (48) umfasst, das eine längs der Bearbeitungsachse (50) ersteckte Haftfläche (49) für einen Metallhohlkörper (2) mit einer zylinderabschnittsförmigen Profilierung aufweist, wobei eine Profilachse der Haftfläche (49) parallel, insbesondere konzentrisch oder exzentrisch, zur Bearbeitungsachse (50) ausgerichtet ist.

4. Beschneidevorrichtung nach Anspruch 3, **dadurch gekennzeichnet, dass** die Haftfläche (49) von Ausnehmungen (51) durchsetzt ist, die mit einem im Werkstückrundtisch (15) ausgebildeten Saugkanal (12) in fluidisch kommunizierender Verbindung stehen und die für eine Unterdruckbeaufschlagung der Haftfläche (49) zur Anhaftung des Metallhohlkörpers (2) ausgebildet sind.

5. Beschneidevorrichtung nach Anspruch 1, **dadurch gekennzeichnet, dass** der Riemenantrieb (57) für eine gleichzeitige Bewegungseinkopplung auf mehrere, insbesondere zwei, Spannmittel (36) ausgebildet ist und zwei Umlenkrollen (63, 64) umfasst, deren Rotationsachsen derart in radialer Richtung nach außen beabstandet zu einem Umkreis um die Reibräder (38) des Werkstückrundtischs (15) angeordnet sind, dass der Treibriemen (56) zwischen den beiden Umlenkrollen (63, 64) an mehreren Reibrädern (38) anliegt.

6. Beschneidevorrichtung nach einem der Ansprüche 1 bis 5, **dadurch gekennzeichnet, dass** am Maschinengestell (4) ein parallel zur Drehachse (18) linearbeweglich gelagerter Einschubstößel (23) angeordnet ist, der zur Bereitstellung einer Einschubbewegung für den Metallhohlkörper (2) von der Haftfläche (49) in das Spannmittel (36) ausgebildet ist.

7. Beschneidevorrichtung nach einem der Ansprüche 1 bis 5, **dadurch gekennzeichnet, dass** den Spannmitteln (36) jeweils ein parallel zur Drehachse (18) linearbeweglich gelagerter Ausschubstößel (28) zugeordnet ist, der zur Bereitstellung einer Ausschubbewegung für den Metallhohlkörper (2) aus dem Spannmittel (36) ausgebildet ist und dass am Maschinengestell (4) eine Steuerkurve (25) für die Ausschubstößel (28) ausgebildet ist, an der Endbereiche (44) der Ausschubstößel (28) anliegen.

8. Beschneidevorrichtung nach einem der vorhergehenden Ansprüche, **dadurch gekennzeichnet, dass** eine vom Schneidstrahl bestimmte Schneidachse (52) der Schneideinrichtung (19) einen Winkel in einem Bereich von 60 Grad bis 120 Grad, insbesondere 90 Grad, zur Bearbeitungsachse (50) einnimmt.

9. Beschneidevorrichtung nach einem der vorhergehenden Ansprüche, **dadurch gekennzeichnet, dass** dem Maschinengestell (4) eine Einstelleinrichtung (22) zugeordnet ist, die für eine Einstellung einer relativen Position zwischen Werkstückrundtisch (15) und Schneideinrichtung (19) längs der Drehachse (18) des Werkstückrundtischs (15) ausgebildet ist.

10. Beschneidevorrichtung nach einem der vorhergehenden Ansprüche, **dadurch gekennzeichnet, dass** der Aufnahmeeinrichtung (17) ein Sensormittel (24) zur Ermittlung wenigstens einer physikalischen Eigenschaft des Metallhohlköpers (2), insbesondere einer Temperatur oder Längenausdehnung des Metallhohlkörpers (2), zugeordnet ist, die zur Bereitstellung eines Sensorsignals ausgebildet ist, und dass eine Steuereinrichtung (29) zur Verarbeitung des Sensorsignals und zur Bereitstellung eines Steuersignals an einen Aktor (22) ausgebildet ist, wobei der Aktor (22) mit der Einstelleinrichtung für eine automatisierte Einstellung einer Schneidposition der Schneideinrichtung (19) gekoppelt ist.

11. Verfahren zum Beschneiden eines Metallhohlkörpers (2) mit einer Schneideinrichtung (19), die zur Bereitstellung eines Schneidstrahls, insbesondere eines Laserstrahls, für einen berührungslosen Beschneidevorgang am Metallhohlkörper (2) ausgebildet ist, mit den Schritten: Bereitstellen des Metallhohlkörpers (2) an ein Spannmittel (36), das drehbeweglich an einem Werkstückrundtisch (15) aufgenommen ist, an einer Beladeposition (A) und Durchführen wenigstens einer Drehschrittbewegung für den Werkstückrundtisch (15) zur Bewegung des Metallhohlkörpers (2) von der Beladeposition (A) zu einer Bewegungsposition (D), **gekennzeichnet durch** die weiteren Schritte: Einleiten einer kontinuierlichen Rotationsbewegung auf den am Spannmittel (36) aufgenommenen Metallhohlkörper (2), Durchführen wenigstens einer Drehschrittbewegung für den Werkstückrundtisch (15) zur Bewegung des Metallhohlkörpers (2) von der Bewegungsposition (D) zu einer Schneidposition (E), Durchführen des berührungslosen Schneidvorgangs unter Beibehaltung der kontinuierlichen Rotationsbewegung für den am Spannmittel (36) aufgenommenen Metallhohlkörper (2), Durchführen wenigstens einer Drehschrittbewegung für den Werkstückrundtisch (15) zur Bewegung des Metallhohlkörpers (2) von der Schneidposition (E) zu einer Entladeposition (H) und Entladen des Metallhohlkörpers (2).

12. Verfahren nach Anspruch 11, **dadurch gekennzeichnet, dass** eine Einstellung einer Schnittlänge für den Metallhohlkörper (2), insbesondere in Abhängigkeit von einem Sensorsignal eines zur Ermittlung wenigstens einer physikalischen Eigenschaft des Metallhohlköpers (2), insbesondere einer Temperatur oder Längenausdehnung des Metallhohlkörpers, ausgebildeten Sensormittels (24), durch eine relative Verlagerung der Schneideinrichtung (19) gegenüber dem Werkstückrundtisch (15) längs der Drehachse (18) des Werkstückrundtischs (15) vorgenommen wird.

## Claims

1. Trimming device for metal hollow bodies (2), in particular aerosol cans, the device comprising a machine frame (4) on which a workpiece round table (15) is mounted for rotation about an axis of rotation (18) and on which a cutting device (19) is located, wherein the workpiece round table (15) comprises a plurality of holding devices (17), each designed for holding a metal hollow body (2) for carrying out a trimming operation, and wherein the cutting device (19) is designed for providing a cutting beam, in particular a laser beam, for a contactless trimming operation on the metal hollow body (2), wherein a drive device (5) designed for providing a rotary step movement for the workpiece round table (15) is assigned to the workpiece round table (15), wherein the holding device (17) comprises a clamping means (36), which is mounted on the workpiece round table (15) for rotation about a machining axis (50) and which is designed for holding a region, in particular an outer region, of the metal hollow body (2), **characterised in that** the clamping means (36) mounted on the workpiece round table (15) for rotation about the machining axis (50) comprises a friction wheel (38), and **in that** a belt drive (57) with a continuous drive belt (56), which is designed for coupling a motion onto the friction wheel (38), is assigned to the workpiece round table (15).

2. Trimming device according to claim 1, **characterised in that** the drive device (5) is designed as a gearless electric direct drive.

3. Trimming device according to claim 1, **characterised in that** the holding device (17) comprises a holding means (48), which is located adjacent to the clamping means (36) and extends along the machining axis (48) and which has an adhesion surface (49) for a metal hollow body (2), which extends along the machining axis (50) and has a cylindrical section profiling, the profile axis of the adhesion surface (49) being oriented parallel, in particular concentric with or eccentric relative to, the machining axis (50).

4. Trimming device according to claim 3, **characterised in that** recesses (51), which communicate fluidically with a suction passage (12) formed in the workpiece round table (15) and which are designed for applying a vacuum to the adhesion surface (49) for holding the metal hollow body (2), pass through the adhesion surface (49).

5. Trimming device according to claim 1, **characterised in that** the belt drive (57) is designed for simultaneously coupling a motion onto several, in particular two, clamping means (36) and comprises two deflection pulleys (63, 64), the axes of rotation of which are arranged in such a way in the radial direction outside at a distance from a perimeter around the friction wheels (38) of the workpiece round table (15) that the drive belt (56) contacts several friction wheels (38) between the two deflection pulleys (63, 64).

6. Trimming device according to any of claims 1 to 5, **characterised in that** a push-in plunger (23), which is capable of linear movement parallel to the axis of rotation (18) and designed for providing a push-in movement for the metal hollow body (2) from the adhesion surface (49) into the clamping means (36), is provided on the machine frame (4).

7. Trimming device according to any of claims 1 to 5, **characterised in that** an ejection plunger (28), which is mounted for linear movement parallel to the axis of rotation (18) and designed for providing an ejection movement for the metal hollow body (2) from the clamping means (36), is assigned to each clamping means (36), and **in that** a control cam (25) for the ejection plungers (28), against which end regions of the ejection plungers (28) bear, is formed on the machine frame (4) .

8. Trimming device according to any of the preceding claims, **characterised in that** a cutting axis (52) of the cutting device (19) as defined by the cutting beam extends at an angle in a range of 60 degrees to 120 degrees, in particular 90 degrees, to the machining axis (50).

9. Trimming device according to any of the preceding claims, **characterised in that** an adjusting device (22) designed for an adjustment of a relative position between the workpiece round table (15) and the cutting device (19) along the axis of rotation (18) of the workpiece round table (15) is assigned to the machine frame (4).

10. Trimming device according to any of the preceding claims, **characterised in that** a sensor means (24) for detecting at least one physical property of the metal hollow body (2), in particular a temperature or linear expansion of the metal hollow body (2), is assigned to the holding device (17) for providing a sensor signal, and **in that** a control unit (29) is designed for processing the sensor signal and for providing a control signal to an actuator (22), the actuator (22) being coupled to the adjusting device for an automated adjust¬ment of a cutting position of the cutting device (19).

11. Method for trimming a metal hollow body (2) with a cutting device (19) designed for providing a cutting beam, in particular a laser beam, for a contactless trimming operation on the metal hollow body (2), the method comprising the steps of: supplying the metal hollow body (2) to a clamping means (36) rotatably located at a workpiece round table (15) at a loading position (A) and performing at least one rotary step movement for the workpiece round table (15) to move the metal hollow body (2) from the loading position (A) to a moving position (D), **characterised in that** by the following steps: inducing a continuous rotary movement to the metal hollow body (2) located on the clamping means (36), performing at least one rotary step movement for the workpiece round table (15) to move the metal hollow body (2) from the moving position (D) to a cutting position (E), executing the contactless cutting operation while maintaining the continuous rotary movement for the metal hollow body (2) located on the clamping means (36), performing at least one rotary step movement for the workpiece round table (15) to move the metal hollow body (2) from the cutting position (E) to an unloading position (H) and unloading the metal hollow body (2).

12. Method according to claim 11, **characterised in that** a cutting length for the metal hollow body (2) is adjusted, in particular in response to a sensor signal of a sensor means (24) designed for detecting at least one physical property of the metal hollow body (2), in particular a temperature or linear expansion of the metal hollow body (2), by a relative displacement of the cutting device (19) versus the workpiece round table (15) along the axis of rotation (18) of the workpiece round table (15).

## Revendications

1. Dispositif de découpage pour des corps creux en métal (2), en particulier pour des bombes aérosols, avec un bâti de machine (4), au niveau duquel un plateau circulaire porte-pièce (15) est monté de manière à pouvoir tourner autour d'un axe de rotation (18) et au niveau duquel un système de coupe (19) est disposé, dans lequel le plateau circulaire porte-pièce (15) comprend plusieurs systèmes de réception (17), qui sont réalisés respectivement pour une fixation d'un corps creux en métal (2) pour la mise en oeuvre d'une opération de découpage et dans lequel le système de coupe (19) est réalisé pour fournir un rayon de coupe, en particulier un rayon laser, pour une opération de découpage sans contact au niveau du corps creux en métal (2), dans lequel est associé au plateau circulaire porte-pièce (15) un système d'entraînement (5), qui est réalisé pour fournir un déplacement incrémentiel de rotation au niveau du plateau circulaire porte-pièce (15) et dans lequel le système de réception (17) comprend un moyen de serrage (36) monté au niveau du plateau circulaire porte-pièce (15) de manière à pouvoir tourner autour d'un axe d'usinage (50), qui est réalisé pour recevoir une zone, en particulier une zone extérieure, du corps creux en métal (2), **caractérisé en ce que** le moyen de serrage (36) monté au niveau du plateau circulaire porte-pièce (15) de manière à pouvoir tourner autour de l'axe d'usinage (50) comprend une roue de friction (38), et qu'un entraînement à courroie (57) avec une courroie de transmission (56) circulant en périphérie, qui est réalisé pour imprimer un déplacement sur la roue de friction (38), est associé au plateau circulaire porte-pièce (15).

2. Dispositif de découpage selon la revendication 1, **caractérisé en ce que** le système d'entraînement (5) est réalisé en tant qu'un entraînement direct électrique sans transmission.

3. Dispositif de découpage selon la revendication 1, **caractérisé en ce que** le système de réception (17) comprend un moyen de maintien (48) disposé de manière adjacente au moyen de serrage (36), s'étendant le long de l'axe d'usinage, qui présente une surface adhésive (49) s'étendant le long de l'axe d'usinage (50) pour un corps creux en métal (2) avec un profilage en forme de section cylindrique, dans lequel un axe profilé de la surface adhésive (49) est orienté de manière parallèle, en particulier de manière concentrique ou excentrique, par rapport à l'axe d'usinage (50).

4. Dispositif de découpage selon la revendication 3, **caractérisé en ce que** la surface adhésive (49) est traversée par des évidements (51), qui sont en communication fluidique avec un canal d'aspiration (12) réalisé dans le plateau circulaire porte-pièce (15) et qui sont réalisés pour soumettre à l'action d'une dépression la surface adhésive (49) pour l'adhérence du corps creux en métal (2).

5. Dispositif de découpage selon la revendication 1, **caractérisé en ce que** l'entraînement à courroie (57) est réalisé pour imprimer un déplacement simultanément sur plusieurs, en particulier deux, moyens de serrage (36), et comprend deux poulies de renvoi (63, 64), dont les axes de rotation sont disposés de telle manière à distance vers l'extérieur dans une direction radiale par rapport à un périmètre autour des roues de friction (38) du plateau circulaire porte-pièce (15) que la courroie de transmission (56) repose au niveau de plusieurs roues de friction (38) entre les deux poulies de renvoi (63, 64).

6. Dispositif de découpage selon l'une quelconque des revendications 1 à 5, **caractérisé en ce qu'**est disposé au niveau du bâti de machine (4) un coulisseau d'insertion par glissement (23) monté de manière mobile linéairement parallèlement à l'axe de rotation (18), qui est réalisé pour fournir un déplacement d'insertion par glissement pour le corps creux en métal (2) de la surface adhésive (49) dans le moyen de serrage (36).

7. Dispositif de découpage selon l'une quelconque des revendications 1 à 5, **caractérisé en ce qu'**est associé aux moyens de serrage (36) respectivement un coulisseau de sortie par glissement (28) monté de manière mobile linéairement parallèlement à l'axe de rotation (18), qui est réalisé pour fournir un déplacement de sortie par glissement pour le corps creux en métal (2) hors du moyen de serrage (36), et qu'est réalisée au niveau du bâti de machine (4) une came de commande (25) pour les coulisseaux de sortie par glissement (28), au niveau de laquelle reposent des zones d'extrémité (44) des coulisseaux de sortie par glissement (28).

8. Dispositif de découpage selon l'une quelconque des revendications précédentes, **caractérisé en ce qu'**un axe de coupe (52), défini par le rayon de coupe, du système de coupe (19) forme un angle dans une plage de 60 degrés à 120 degrés, en particulier de 90 degrés, par rapport à l'axe d'usinage (50).

9. Dispositif de découpage selon l'une quelconque des revendications précédentes, **caractérisé en ce qu'**est associé au bâti de machine (4) un système de réglage (22), qui est réalisé pour régler une position relative entre le plateau circulaire porte-pièce (15) et le système de coupe (19) le long de l'axe de rotation (18) du plateau circulaire porte-pièce (15).

10. Dispositif de découpage selon l'une quelconque des revendications précédentes, **caractérisé en ce qu'**est associé au système de réception (17) un moyen de capteur (24) servant à déterminer au moins une propriété physique du corps creux en métal (2), en particulier une température ou un allongement longitudinal du corps creux en métal (2), qui est réalisé pour fournir un signal de capteur, et qu'un système de commande (29) est réalisé pour traiter le signal de capteur et pour fournir un signal de commande à un actionneur (22), dans lequel l'actionneur (22) est couplé au système de réglage pour régler de manière automatisée une position de coupe du système de coupe (19).

11. Procédé servant à découper un corps creux en métal (2) avec un système de coupe (19), qui est réalisé pour fournir un rayon de coupe, en particulier un rayon laser, pour une opération de découpage sans contact au niveau du corps creux en métal (2), avec les étapes : de fourniture du corps creux en métal (2) au niveau d'un moyen de serrage (36), qui est logé de manière mobile en rotation au niveau d'un plateau circulaire porte-pièce (15), au niveau d'une position de chargement (A) et de mise en oeuvre d'au moins un déplacement incrémentiel de rotation pour le plateau circulaire porte-pièce (15) servant à déplacer le corps creux en métal (2) depuis la position de chargement (A) vers une position de déplacement (D), **caractérisé par** les autres étapes :
d'initiation d'un déplacement de rotation continu sur le corps creux en métal (2) reçu au niveau du moyen de serrage (36), de mise en œuvre d'au moins un déplacement incrémentiel de rotation pour le plateau circulaire porte-pièce (15) pour déplacer le corps creux en métal (2) depuis la position de déplacement (D) vers une position de coupe (E), de mise en œuvre de l'opération de coupe sans contact en conservant le déplacement de rotation continu pour le corps creux en métal (2) reçu au niveau du moyen de serrage (36), de mise en œuvre d'au moins un déplacement incrémentiel de rotation pour le plateau circulaire porte-pièce (15) pour déplacer le corps creux en métal (2) depuis la position de coupe (E) vers une position de déchargement (H) et de déchargement du corps creux en métal (2).

12. Procédé selon la revendication 11,
**caractérisé en ce qu'**un réglage d'une longueur de coupe pour le corps creux en métal (2) est entrepris, en particulier en fonction d'un signal de capteur d'un moyen de capteur (24) réalisé pour déterminer au moins une propriété physique du corps creux en métal (2), en particulier une température ou un allongement longitudinal du corps creux en métal, par un déplacement relatif du système de coupe (19) par rapport au plateau circulaire porte-pièce (15) le long de l'axe de rotation (18) du plateau circulaire porte-pièce (15).
